# EUROPEAN PATENT SPECIFICATION

(11) **EP 3 635 060 B1**
(45) Date of publication and mention of the grant of the patent: **03.01.2024**
(21) Application number: 18727123.4
(22) Date of filing: 08.05.2018
(51) Int. Cl.: C09D 5/00

(54) **COMPOSITE AEROGEL COATING FOR TEXTILE APPLICATIONS**
ZUSAMMENGESETZTE AEROGELBESCHICHTUNG FÜR TEXTILANWENDUNGEN
REVÊTEMENT D'AÉROGEL COMPOSITE POUR APPLICATIONS TEXTILES

(30) Priority: 08.05.2017 US 201762503033 P
(43) Date of publication of application: 15.04.2020
(73) Proprietor: Lukla LLC, Cincinnati, OH 45202 (US)
(72) Inventor: NASH, Jeffrey, Cincinnati OH 45202 (US); MARKESBERY, Michael Glenn, Cincinnati OH 45202 (US); VENNA, Rithvik, Broadview Heights OH 44147 (US)
(74) Representative: Findlay, Alice Rosemary
(86) International application number: PCT/US2018/031657
(87) International publication number: WO 2018/208825

(56) References cited:
- EP-A1- 2 990 510
- CN-A- 104 553 089
- US-B1- 6 764 667

## Description

### FIELD OF THE INVENTION

The present invention is directed to coatings for textiles and textile articles including same.

### BACKGROUND OF THE INVENTION

Various insulating materials have been used in the textile industry to protect users against uncomfortably cold or hot temperatures and high levels of moisture. Insulating textile applications may include, by way of example, apparel (jackets, sweaters, shirts, pants, gloves, hats, etc.), footwear, blankets, sleeping bags, and other articles used to provide protection or comfort against the elements. Typical insulating materials include felt, fleece, flannel, wool, various forms of latex foam, or the like. However, many insulating materials are bulky and provide only limited protection. Outdoor and performance apparel and gear needs to strike a balance between insulating performance, aesthetics and wearability. Thin, flexible materials that provide superior thermal performance are in demand.

There is thus a need for high performance insulating materials that are thin, flexible, and highly resistant to extreme temperatures and weather conditions.

EP 2990510 discloses hollow polymer fibres comprising aerogel particles.

### SUMMARY OF THE INVENTION

The invention is defined by the claims.

The present invention provides a textile assembly in which a first textile has a composite coating thereon. The composite coating is made from a composite material which includes a polymer matrix and a particulate addition, wherein the particulate addition is 1-100% silica aerogel particles and 0-99% microspheres, by volume of the particulate addition. In one embodiment, a composite material for coating a textile substrate comprises a foamed polymer matrix and 2-60% by volume of a particulate addition, wherein the particulate addition comprises 20-60% hydrophobic silica aerogel particles by volume of the particulate addition having a particle size distribution of 1-50 microns, 20-50% expanded microspheres by volume of the particulate addition, and 20-50% unexpanded microspheres by volume of the particulate addition.

### BRIEF DESCRIPTION OF THE DRAWINGS

The accompanying drawings, which are incorporated in and constitute a part of this specification, illustrate embodiments of the invention and, together with a general description of the invention given above, and the detailed description given below, serve to explain the invention.

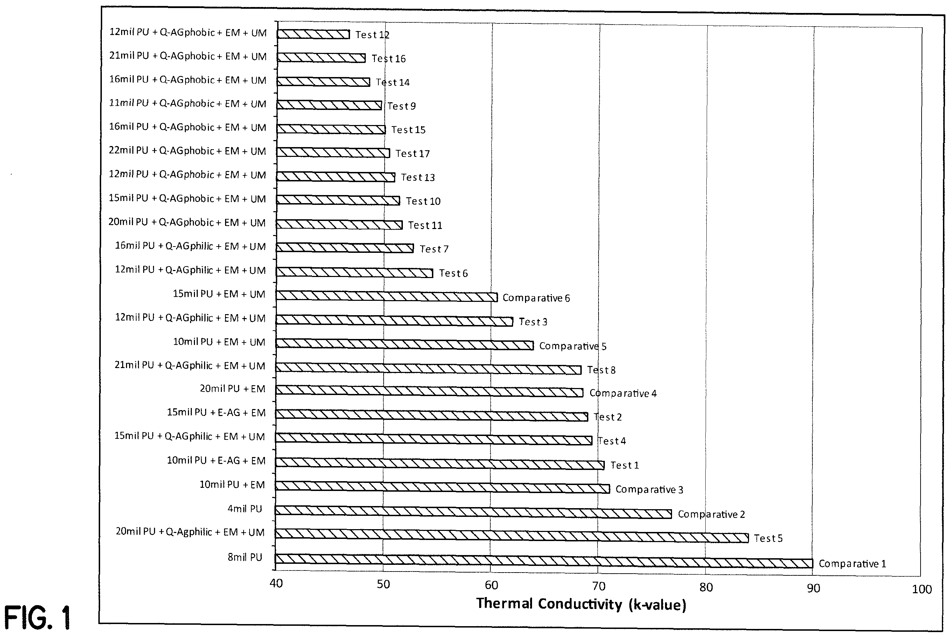

FIG. 1 is a graph of thermal conductivity for textile assemblies in accordance with various embodiments of the invention.

### DETAILED DESCRIPTION

All percent values herein refer to percent by volume unless otherwise specified. All numerical values provided herein are numbers of approximation, with no intent to be strictly limited to the exact numerical value. The terms "increased thermal resistance" and "decreased thermal conductivity" are used interchangeably because they are inverse properties of each other. A mil is a measurement equal to 1/1000 of an inch and 1 mil is equal to 0.0254 mm. Micron refers to a micrometer, µm. The d(10) is the particle size at which 10% of the volume distribution of particles have a size less than this value. The d(50) is the size of the particle that 50% of the volume distribution is smaller than and 50% of the volume distribution is larger than, i.e., the median particle size. The d(90) is the particle size at which 90% of the volume distribution of particles have a size less than this value.

A composite coating material for textile application is disclosed herein in which silica aerogel particles are embedded in a polymer matrix. The composite material provides improved insulating properties (e.g., higher thermal resistance, and conversely, lower thermal conductivity) and may be applied to textiles or as films in apparel, equipment, or softgoods. Further, the composite coating material can increase moisture and air permeability, and the formulation may be tailored to achieve more or less permeability, as desired.

In accordance with the invention, the composite material is applied to a textile substrate to enhance the overall performance of the coated textile by increasing its thermal resistance (or conversely, decreasing its thermal conductivity). The composite material may be applied to textiles to provide performance attributes that are primary thermal insulation. The composite material may be foamed when it is applied to a textile. The composite material comprises a polymeric matrix and aerogel particles. The composite material may further comprise microspheres such as glass beads, either expanded or unexpanded, or both. The polymeric matrix may be aqueous polyurethane-based, although other polymer coating chemistries may be used such as EVA (ethylene vinyl acetate) or acrylic. The polymeric matrix may be a foamed polymer, and the foam may be ester- or ether-based and may include aliphatic or aromatic structures. The composite material provides protection from weather elements, such as providing wind resistance (or total wind blocking) and water resistance (ranging from light water resistance to water proofing). A foamed composite material provides air and moisture permeability such that the coated textile articles are breathable. Additionally, the composite material may also bond the textile substrate to a secondary textile on the back side. This secondary textile may add durability, thermal resistance, moisture performance (e.g., wicking, absorption) and sensory comfort to the user.

The addition of aerogel particles to the polymeric matrix increases thermal resistance (or conversely, decreases thermal conductivity) of the composite material and overall textile assembly (e.g., a face textile, the composite coating, and an optional backer textile). The primary benefits of using aerogels include high porosity and internal surface area to increase thermal resistance, excellent insulation properties, low density, fireproof additive that provides composite with improved fire resistance, environmentally benign additive, and increased thermal resistance in textiles resulting from minimizing thermal bridging of the matrix material. Advantageously, the aerogel particles are amorphous silica particles having a porosity of 95% or greater. The particles are advantageously hydrophobic, which may include subjecting hydrophilic particles to a surface treatment that renders the surface hydrophobic.

Aerogel particles can be obtained from any commercial source, including for example Cabot Corporation, Svenska Aerogel, and Aspen Aerogel. By way of example and not limitation, Enova^{®} Aerogel IC3110 from Cabot Corporation (particle size 0.1-0.7 mm), Enova^{®} Aerogel IC3100 from Cabot Corporation (particle size 2-40 mm), or Quartzene^{®} Z1 from Svenska Aerogel (particle size 1-40 mm) may be used. The aerogel particles may have a particle size distribution ranging from 0.1-100 microns, 0.5-70 microns, 1-50 microns, 1-30 microns, 1-10 microns, 10-40 microns, 20-30 microns, or 30-50 microns. The median particle size may be on the order of 2-10 microns, 2-7 microns, 4-10 microns, 3-8 microns, or 4-6 microns. In one embodiment, the aerogel particles have a particle size distribution of 0.5-50 microns with a d(10) in the range of 1-3 microns, a d(90) in the range of 8-30 microns, and a d(50) in the range of 2-7 microns. In one example, the aerogel particles have a particles size distribution of 1-40 microns with a d(10) of ~2 microns, a d(50) of ~4-6 microns, and a d(90) of -10-14 microns. The pore size distribution in the aerogel particles may be on the order of 1-50 nm, and the surface area (S_{BET}) may be on the order of 200-350 m²/g. The aerogel particles may be included in the composite material at a volume fraction from 2-60%, 3-40%, 4-30%, 20-60%, 20-40%, 30-50%, or 40-60%.

In one embodiment, a portion of the aerogel particles are substituted with microspheres. Thus, the composite material comprises a particulate addition in a polymeric matrix, wherein the particulate addition comprises from 2-60%, 3-40%, 4-30%, 20-60%, 20-40%, 30-50%, or 40-60% by volume of the composite material, and wherein the particulate addition is 1-10% aerogel particles and 0-99% microspheres. The microspheres may be hollow and may be glass, plastic, or ceramic, and may be expanded or unexpanded when added into the coating formulation. Because silica aerogels have traditionally been expensive due to the supercritical drying process used in their manufacture, microspheres such as hollow glass beads or expandable thermoplastics can offer a less expensive option than aerogel particles, and can trap air, which provides thermal resistance. Unexpanded microspheres are not fully formed. At high temperature processing, the microspheres react and expand to form hollow microspheres having air trapped inside. The microspheres used in the particulate addition can be expanded, unexpanded, or a combination of expanded and unexpanded. The microspheres can be expanded prior to being added to the composite, and/or can be added in the unexpanded form and expanded *in situ* by heating the textile after the composite material has been coated onto the textile substrate.

In one embodiment, the particulate addition includes the aerogel particles in an amount of at least 10%, or at least 20%, or at least 30%, or at least 40%, or at least 50%, with the remainder being microspheres. In a further embodiment, the particulate addition includes at least 10%, or at least 20%, or at least 30%, or at least 40%, or at least 50% microspheres. In one embodiment, the particulate addition includes 25-45% aerogel particles and 55-75% microspheres. In one embodiment, the percent ratio of aerogel particles (AG) to expanded microspheres (EM) to unexpanded microspheres (UM) is 10-90 AG : 10-90 EM : 10-90 UM. In another embodiment, the percent ratio of AG:EM:UM is 20-60:20-50:20-50. In another embodiment, the percent ratio of AG:EM:UM is 25-45:25-45:25-45. In yet another embodiment, each particle type is provided in an equal ratio, i.e., 1/3:1/3:1/3. After the composite material is coated onto a textile substrate and the textile assembly is formed and subjected to a heat treatment, the unexpanded microspheres expand, such that the coating contains the aerogel particles and expanded microspheres at a greater volume in the composite coating than in the composite material prior to the coating and heat treatment.

To ensure chemical compatibility or to ensure the performance of the aerogel additives, the aerogel particles may be treated in some manner to add physical or chemical functionality. For example, the aerogel particles may be treated to render their surfaces hydrophobic, thereby increasing the water resistance of the composite material. The aerogel particles may be treated or processed into the base polymeric coating. In one embodiment, the aerogel particles are physically blended into a polymer matrix and then applied to the textile. To prevent silica dust during mixing, a master batch process may be used in which a slurry is first created with silica aerogel particles using isopropyl alcohol. The slurry is then mixed with a waterborne polymer dispersion. Microspheres can be mixed into the slurry before mixing with the polymer dispersion, or can be added into the polymer dispersion before, concurrently with, or after the slurry addition. Alternatively, an enclosed vessel may be used for mixing to eliminate the need for first creating the silica aerogel slurry.

The polymeric matrix may be an aqueous polyurethane solution but may also include polyester and acrylic solutions plus their solvent-based counterparts. Further, the composite coating may be a foam coating, such that the composite material may include one or more foaming agents. Any commercially available polymeric matrix material suitable for textile coatings may be used. By way of example and not limitation, Impranil^{®} products from Covestro may be used, such as Impranil^{®} DLU. Additionally, any known foaming agent may be used. The polymeric matrix may be foamed prior to adding the particulate addition, or after adding the particulate addition.

The thermal performance of the composite material coating is determined by measuring the thermal conductivity or thermal resistance using a variety of methodologies in the form of the complete textile assembly. Performance gains are compared against the polymeric textile coating without the addition of aerogel particles in the complete textile assembly. Effective thermal performance gains may be at least 30%, or at least 40%, or at least 50% greater than the reference material. For example, the particulate addition may be effective to decrease thermal conductivity of a textile assembly coated with the composite material by at least 30% compared to the textile assembly coated only with the polymer matrix. According to an embodiment, a textile assembly having the composite material coated thereon exhibits a thermal conductivity less than 60 kW/mK, such as less than 55 kW/mK, less than 52 kW/mK, or less than 50 kW/mK (per ASTM C518 @0.3 psi).

Increased thermal performance provides two primary benefits to the final end product or user of such product. In one form, the increased thermal performance provides added insulation to the textile or textile-based product (e.g., apparel, footwear, gear, etc.) to provide thermal comfort against cold environmental temperatures. The composite coating and resulting textile assembly may be used alone as the primary insulation of the textile-based product or in conjunction with other standard insulations such as non-woven battings, foams and natural products such as down and feathers. In the second form, the increased thermal performance provides resistance to contact with surfaces of extreme environmental temperatures. The composite coating slows the heat transfer of the extreme external environment through the textile assembly and to the user. This provides protection to the user. The composite coating may be included in personal protective equipment (PPE).

Alternatively, the composite coating can be formed into a film that has many uses in textiles and apparel. In some cases, it may be used as-is and constructed into a textile based product. In other applications, it would be laminated to a textile to add structure, user comfort, increased thermal value, visual interest, or other benefits of laminated textiles.

Alternatively, the composite coating can be formed on top of an existing coating, lamination, or textile substrate in a continuous full film or discontinuous pattern as a functional layer to add thermal resistance and/ or decrease thermal conductivity. This differs from the primary use case in which the composite coating is also providing other functions such as bonding of textiles or providing water and/or wind resistance. This is analogous to a 2.5 (2 ½) layer waterproof breathable coating or lamination typical in technical outerwear for consumers.

In one embodiment, silica aerogel particles are embedded into a textile foam coating. This foam coating is typically used as a bonding agent between two textiles; it provides the adhesive strength plus some additional performance attributes, primarily the control of permeability of the composite textile, which could include water, air or special substances such as blood or gases. The mixture may include up to 50% silica aerogel particles in the foam coating matrix (e.g., polyurethane based), for example 1-20% or 2-10%. The coating may be applied to a textile substrate and optionally another textile may be applied to the other side of the coating. This creates the sandwich with the coating in between the two textile layers. The thickness of this coating may be 250-1000 microns (0.25-1 mm or 10-40 mil), 250-600 microns (0.25-0.6 mm or 10-23.6 mil), or 300-560 microns (0.3-0.56 mm or 12-22 mil), or 500 microns (0.5 mm or 20 mil).

According to embodiments here, the components and features of the composite material can be tailored to provide a textile assembly with the desired properties. For example, the relative amounts of polymer matrix, aerogel particles, expanded microspheres and unexpanded microspheres may be varied, as well as the coating thickness, degree of foaming of the polymer matrix, surface treatment of the aerogel particles, particle size distribution, porosity and/or pore size distribution of the aerogel particles, thickness of the textile assembly, method of coating the textile assembly, and the type and number of textile substrates in the assembly.

In the examples provided in TABLES 1 and 2, a textile assembly was formed using a polyester knit face material (textile #DK401 PBR) and a fleece backer material (textile #F70203), with the composite material therebetween. The composite material was coated onto either the backer material (B) or the face material (F), using either 1 coating pass or 2 coating passes, which coating methods are thus designated B1, B2, F1 or F2. The other material was then applied onto the coating and the assembly laminated and heated. In all examples below, the polymer matrix was a foamed aliphatic polyester-polyether polyurethane dispersion ("PU") available as Impranil^{®} DLU from Covestro LLC. Comparative Examples 1 and 2 used only the foamed PU for the coating, with no particulate addition. For all other examples, the mixture included 120g PU and 7g foaming agents and other incidental additives into which a particulate addition was mixed, where the particulate addition included one or a combination of 2.4g aerogel particles, 3g expanded microspheres, and 1.5g unexpanded microspheres, as indicated. For Comparative Examples 3-6, the particulate addition included microspheres, but no aerogel particles. For Tests 1-17, the particulate addition included a combination of silica aerogel particles and microspheres. The silica aerogel particles were either Enova^{®} Aerogel IC3110 from Cabot Corp. ("E-AG") or Quartzene^{®} Z1 from Svenska Aerogel, either hydrophilic ("Q-AG_{philic}") or treated to be hydrophobic ("Q-AG_{phobic}"). The E-AG particles have a smaller particle size distribution of 0.1-0.7 mm while the Q-AG particles have a larger particle size distribution of 1-40 mm. The microspheres were either expanded ("EM") or a mixture of expanded and unexpanded ("EM + UM"). The thickness of the coating material as applied to the face material or backer material is provided in mils. The thickness (t), in mm, refers to the total thickness of the textile assembly, and k-value is the thermal conductivity measurement, according to ASTM C518 at 0.3 psi, in kW/mK. The k-value was measured at different textile assembly thicknesses, referred to as "k-value @ variable t" with the variable thicknesses provided in TABLE 1

**TABLE 1**

| **Test #** | **Coating Thickness and Formulation** | **Coating method** | **k-value @ variable t** | **Variable** |
|---|---|---|---|---|
| | | | | **t (mm)** |
| Comparative 1 | 8mil PU | F1 | 90 | 2 |
| Comparative 2 | 4mil PU | F1 | 76.9 | 2 |
| Comparative 3 | 10mil PU + EM | F1 | 71.1 | 2.3 |
| Comparative 4 | 20mil PU + EM | F1 | 68.6 | 2.3 |
| Comparative 5 | 10mil PU + EM + UM | F1 | 63.9 | 2.3 |
| Comparative 6 | 15mil PU + EM + UM | F1 | 60.5 | 2.3 |
| Test 1 | 10mil PU + E-AG + EM | F1 | 70.6 | 2.3 |
| Test 2 | 15mil PU + E-AG + EM | F1 | 69 | 2.3 |
| Test 3 | 12mil PU + Q-AG_{philic} + EM + UM | F1 | 62 | 1.6 |
| Test 4 | 15mil PU + Q-AG_{philic} + EM + UM | F1 | 69.4 | 1.6 |
| Test 5 | 20mil PU + Q-AG_{philic} + EM + UM | F1 | 84 | 1.75 |
| Test 6 | 12mil PU + Q-AG_{philic} + EM + UM | F2 | 54.6 | 1.9 |
| Test 7 | 16mil PU + Q-AG_{philic} + EM + UM | F2 | 52.8 | 1.9 |
| Test 8 | 21mil PU + Q-AG_{philic} + EM + UM | F2 | 68.4 | 2 |
| Test 9 | 11mil PU + Q-AG_{phobic} + EM + UM | B1 | 49.7 | 1.75 |
| Test 10 | 15mil PU + Q-AG_{phobic} + EM + UM | B1 | 51.5 | 1.75 |
| Test 11 | 20mil PU + Q-AG_{phobic} + EM + UM | B1 | 51.7 | 1.75 |
| Test 12 | 12mil PU + Q-AG_{phobic} + EM + UM | F2 | 46.7 | 1.75 |
| Test 13 | 12mil PU + Q-AG_{phobic} + EM + UM | B2 | 51 | 1.75 |
| Test 14 | 16mil PU + Q-AG_{phobic} + EM + UM | F2 | 48.6 | 1.75 |
| Test 15 | 16mil PU + Q-AG_{phobic} + EM + UM | B2 | 50.1 | 1.75 |
| Test 16 | 21mil PU + Q-AG_{phobic} + EM + UM | F2 | 48.2 | 1.75 |
| Test 17 | 22mil PU + Q-AG_{phobic} + EM + UM | B2 | 50.5 | 1.75 |

The bar graph of FIG. 1 depicts the thermal conductivity results for the textile assemblies. An 8 mil PU coating is comparable to a 12-16 mil composite coating given the increase in thickness attributable to the particulate addition. In general, the hydrophobic aerogel particles with the larger particle size distribution (Q-AG_{phobic}), in combination with the expanded and unexpanded microspheres, provided the lowest thermal conductivity, and thus offer the best thermal resistance, across the range of coating thicknesses tested, e.g., 10-22 mil (0.25-0.56 mm). The combination of expanded and unexpanded microspheres also has a positive effect on thermal conductivity, particularly with thinner textile assemblies, and can lower the cost of the composite material. Textile assemblies with 1.75 mm thickness using the Q-AG_{phobic} + EM + UM combination at coating thicknesses on the order of 12-16 mil achieved thermal conductivities in the range of 46-52 kW/mK compared to 90 kW/mK for the 2 mm thick textile assembly with the 8 mil PU coating, which is a decrease in thermal conductivity on the order of 42-49%.

Some of the textile assemblies were subjected to machine washing, and either dried flat or tumbled dry. The results are provided in TABLE 2. MWC refers to Machine Wash in Cold water; MW_{eco}W refers to Machine Wash on eco-cycle in Warm water; MWW refers to Machine Wash in Warm water; DF refers to Dry Flat; and TDL refers to Tumble Dry on Low heat. A blank cell means that the test was not conducted. Fail means that the textile assembly delaminated. Edges means that the textile assembly peeled at the edges. Pass means that the textile assembly remained fully intact.

**TABLE 2**

| **Test #** | **Coating Thickness and Formulation** | | **MWC-DF** | **MW_{eco}W-DF** | **MWW-TDL** |
|---|---|---|---|---|---|
| Test 3 | 12mil PU + Q-AG_{philic} + EM + UM | F1 | Fail | | |
| Test 4 | 15mil PU + Q-AG_{philic} + EM + UM | F1 | Fail | | |
| Test 5 | 20mil PU + Q-AG_{philic} + EM + UM | F1 | Fail | | |
| Test 6 | 12mil PU + Q-AG_{philic} + EM + UM | F2 | Pass | Edges | Edges |
| Test 7 | 16mil PU + Q-AG_{philic} + EM + UM | F2 | Fail | | |
| Test 8 | 21mil PU + Q-AG_{philic} + EM + UM | F2 | Pass | Edges | Edges |
| Test 9 | 11mil PU + Q-AG_{phobic} + EM + UM | B1 | Pass | Pass | Pass |
| Test 10 | 15mil PU + Q-AG_{phobic} + EM + UM | B1 | Pass | Pass | Pass |
| Test 11 | 20mil PU + Q-AG_{phobic} + EM + UM | B1 | Pass | Pass | Pass |
| Test 12 | 12mil PU + Q-AG_{phobic} + EM + UM | F2 | Pass | Edges | Edges |
| Test 13 | 12mil PU + Q-AG_{phobic} + EM + UM | B2 | Pass | Pass | Pass |
| Test 14 | 16mil PU + Q-AG_{phobic} + EM + UM | F2 | Pass | Pass | Pass |
| Test 15 | 16mil PU + Q-AG_{phobic} + EM + UM | B2 | Pass | Pass | Pass |
| Test 16 | 21mil PU + Q-AG_{phobic} + EM + UM | F2 | Pass | Edges | Edges |
| Test 17 | 22mil PU + Q-AG_{phobic} + EM + UM | B2 | Pass | Pass | Pass |

From the results in TABLE 2, it can be seen that using hydrophilic aerogel particles in the composite material is more likely to cause the textile assembly to delaminate or peel at the edges when laundering. Similarly, it can be seen that applying the composite coating in 1 or 2 passes to the polyester knit face material and then applying and laminating the fleece backer material to the coated polyester knit increases the chances that the textile assembly will delaminate or peel at the edges when laundering the textile article compared to applying the composite coating to the fleece backer material and then applying and laminating the polyester knit face material to the coated fleece. Applying thinner layers in 2 passes versus 1 thicker layer does lessen the risk of delamination.

## Claims

1. A textile assembly comprising a first textile, **characterized in that** the assembly further comprises a composite coating on the first textile, wherein the composite coating is made from a composite material comprising a polymer matrix and a particulate addition, wherein the particulate addition comprises:
1-100% silica aerogel particles by volume of the particulate addition, and
0-99% microspheres by volume of the particulate addition.

2. The textile assembly of claim 1, further comprising a second textile, wherein the composite coating is between the first and second textiles and bonds the first and second textiles together in a laminated structure.

3. The textile assembly of claim 1, wherein the composite coating has a thickness of 250-1000 microns, preferably 300-560 microns.

4. The textile assembly of claim 1, wherein the polymer matrix comprises an aqueous polyurethane dispersion.

5. The textile assembly of claim 4, wherein the polymer matrix further comprises a foaming agent for forming a foamed polyurethane textile coating.

6. The textile assembly of claim 1, wherein the particulate addition is included in a volume fraction from 2-60%, preferably in a volume fraction from 3-40%.

7. The textile assembly of claim 1, wherein the silica aerogel particles have a particle size distribution of 0.5-70 microns, preferably 1-50 microns, more preferably 2-10 microns.

8. The textile assembly of claim 1, wherein the silica aerogel particles have a particle size distribution of 0.5-50 microns with a d(10) in the range of 1-3 microns, a d(90) in the range of 8-30 microns, and a d(50) in the range of 2-7 microns.

9. The textile assembly of claim 1, wherein the microspheres comprise a combination of expanded microspheres and unexpanded microspheres, and wherein preferably the volume percent ratio of silica aerogel particles to expanded microspheres to unexpanded microspheres is 20-60:20-50:20-50.

10. The textile assembly of claim 1, wherein the volume percent ratio of silica aerogel particles to expanded microspheres to unexpanded microspheres is approximately equal.

11. The textile assembly of claim 1, wherein the microspheres include hollow glass beads and/or hollow thermoplastic microspheres.

12. The textile assembly of claim 1, wherein the silica aerogel particles are hydrophobic.

13. A method of making a textile assembly of claim 1 comprising:
forming the composite material; and
coating the composite material on the first textile.

14. The method of claim 13, further comprising:
laminating a second textile to the coated first textile, wherein the composite material adheres the first textile to the second textile.

## Patentansprüche

1. Textilanordnung, umfassend eine erste Textilie,
**dadurch gekennzeichnet, dass** die Anordnung ferner eine Verbundbeschichtung auf der ersten Textilie umfasst, wobei die Verbundbeschichtung aus einem Verbundmaterial hergestellt ist, umfassend eine Polymermatrix und einen Partikelzusatz, wobei der Partikelzusatz umfasst:
zu 1-100 % Siliciumdioxidaerogelpartikel bezogen auf ein Volumen des Partikelzusatzes und
zu 0-99 % Mikrohohlkugeln bezogen auf das Volumen des Partikelzusatzes.

2. Textilanordnung nach Anspruch 1, ferner umfassend eine zweite Textilie, wobei die Verbundbeschichtung zwischen der ersten und der zweiten Textilie ist und die erste und die zweite Textilie in einer laminierten Struktur miteinander verbindet.

3. Textilanordnung nach Anspruch 1, wobei die Verbundbeschichtung eine Dicke von 250-1000 Mikrometern, vorzugsweise 300-560 Mikrometern, aufweist.

4. Textilanordnung nach Anspruch 1, wobei die Polymermatrix eine wässrige Polyurethandispersion umfasst.

5. Textilanordnung nach Anspruch 4, wobei die Polymermatrix ferner ein Schaummittel zum Bilden einer Polyurethanschaumtextilbeschichtung umfasst.

6. Textilanordnung nach Anspruch 1, wobei der Partikelzusatz in einem Volumenanteil von 2-60 %, vorzugsweise in einem Volumenanteil von 3-40 %, eingeschlossen ist.

7. Textilanordnung nach Anspruch 1, wobei die Siliciumdioxidaerogelpartikel eine Partikelgrößenverteilung von 0,5-70 Mikrometern, vorzugsweise 1-50 Mikrometern, mehr bevorzugt 2-10 Mikrometern, aufweisen.

8. Textilanordnung nach Anspruch 1, wobei die Siliciumdioxidaerogelpartikel eine Partikelgrößenverteilung von 0,5-50 Mikrometern mit einem d(10) im Bereich von 1-3 Mikrometern, einen d(90) im Bereich von 8-30 Mikrometern und einen d(50) im Bereich von 2-7 Mikrometern aufweisen.

9. Textilanordnung nach Anspruch 1, wobei die Mikrohohlkugeln eine Kombination von expandierten Mikrohohlkugeln und nicht expandierten Mikrohohlkugeln umfassen, und wobei vorzugsweise das Volumenprozentverhältnis von Siliciumdioxidaerogelpartikeln zu expandierten Mikrohohlkugeln zu nicht expandierten Mikrohohlkugeln 20-60 : 20-50 : 20-50 beträgt.

10. Textilanordnung nach Anspruch 1, wobei das Volumenprozentverhältnis von Siliciumdioxidaerogelpartikeln zu expandierten Mikrohohlkugeln zu nicht expandierten Mikrohohlkugeln ungefähr gleich ist.

11. Textilanordnung nach Anspruch 1, wobei die Mikrohohlkugeln hohle Glaskugeln und/oder hohle thermoplastische Mikrohohlkugeln einschließen.

12. Textilanordnung nach Anspruch 1, wobei die Siliciumdioxidaerogelpartikel hydrophob sind.

13. Verfahren zum Herstellen einer Textilanordnung nach Anspruch 1, umfassend:
Bilden des Verbundmaterials; und
Beschichten des Verbundmaterials auf der ersten Textilie.

14. Verfahren nach Anspruch 13, ferner umfassend:
Laminieren einer zweiten Textilie an die beschichtete erste Textilie, wobei das Verbundmaterial die erste Textilie an die zweite Textilie anhaftet.

## Revendications

1. Ensemble textile comprenant un premier textile, **caractérisé en ce que** l'ensemble comprend en outre un revêtement composite sur le premier textile, dans lequel le revêtement composite est constitué d'un matériau composite comprenant une matrice polymère et une addition particulaire, dans lequel l'addition particulaire comprend :
1 à 100 % de particules d'aérogel de silice en volume de l'addition particulaire,
et 0 à 99 % de microsphères en volume de l'addition particulaire.

2. Ensemble textile selon la revendication 1, comprenant en outre un second textile, dans lequel le revêtement composite est entre les premier et second textiles et lie les premier et second textiles ensemble dans une structure stratifiée.

3. Ensemble textile selon la revendication 1, dans lequel le revêtement composite a une épaisseur de 250 à 1000 micromètres, de préférence 300 à 560 micromètres.

4. Ensemble textile selon la revendication 1, dans lequel la matrice polymère comprend une dispersion aqueuse de polyuréthane.

5. Ensemble textile selon la revendication 4, dans lequel la matrice polymère comprend en outre un agent moussant permettant de former un revêtement textile de polyuréthane expansé.

6. Ensemble textile selon la revendication 1, dans lequel l'addition particulaire est incluse dans une fraction en volume de 2 à 60 %, de préférence dans une fraction en volume de 3 à 40 %.

7. Ensemble textile selon la revendication 1, dans lequel les particules d'aérogel de silice ont une distribution granulométrique de 0,5 à 70 micromètres, de préférence 1 à 50 micromètres, plus préférablement 2 à 10 micromètres.

8. Ensemble textile selon la revendication 1, dans lequel les particules d'aérogel de silice ont une distribution granulométrique de 0,5 à 50 micromètres avec un d(10) compris dans la plage de 1 à 3 micromètres, un d(90) compris dans la plage de 8 à 30 micromètres, et un d(50) compris dans la plage de 2 à 7 micromètres.

9. Ensemble textile selon la revendication 1, dans lequel les microsphères comprennent une combinaison de microsphères expansées et de microsphères non expansées, et dans lequel de préférence le rapport de pourcentage en volume des particules d'aérogel de silice aux microsphères expansées aux microsphères non expansées est de 20-60:20-50:20-50.

10. Ensemble textile selon la revendication 1, dans lequel le rapport de pourcentage en volume des particules d'aérogel de silice aux microsphères expansées aux microsphères non expansées est approximativement le même.

11. Ensemble textile selon la revendication 1, dans lequel les microsphères comportent des billes de verre creuses et/ou des microsphères thermoplastiques creuses.

12. Ensemble textile selon la revendication 1, dans lequel les particules d'aérogel de silice sont hydrophobes.

13. Procédé de fabrication d'un ensemble textile selon la revendication 1 comprenant :
la formation du matériau composite ; et
le revêtement du matériau composite sur le premier textile.

14. Procédé selon la revendication 13, comprenant en outre :
la stratification d'un second textile sur le premier textile revêtu, dans lequel le matériau composite fait adhérer le premier textile au second textile.
